# EUROPEAN PATENT APPLICATION

(11) **EP 4 258 457 A1**
(43) Date of publication of application: **11.10.2023**
(21) Application number: 21961941.8
(22) Date of filing: 29.10.2021
(51) Int. Cl.: H01M 50/569

(54) **BATTERY, ELECTRICAL DEVICE, AND METHOD AND DEVICE FOR MANUFACTURING BATTERY**

(71) Applicant: Contemporary Amperex Technology Co., Limited, Fujian PRC 352100 (CN)
(72) Inventor: LI, Junrong, Ningde Fujian 352100 (CN)
(74) Representative: Rowlands, Stuart Michael
(86) International application number: PCT/CN2021/127690
(87) International publication number: WO 2023/070589

(57) **Abstract**

Provided in the embodiments of the present application are a battery, an electrical device, and a method and device for manufacturing a battery. The battery comprises: a battery cell, which comprises an electrode terminal; a sampling terminal, which is used for collecting signals of the battery cell; and a bus component, which is electrically connected to the battery cell, wherein the sampling terminal is arranged between the bus component and the electrode terminal, and is soldered to the bus component. The battery has a relatively good sampling reliability and is convenient for monitoring the usage situation of a battery cell.

## Description

### TECHNICAL FIELD

This application relates to the field of battery technologies, and in particular, to a battery, an electric device, and a manufacturing method and manufacturing device of battery.

### BACKGROUND

Energy conservation and emission reduction are crucial to the sustainable development of the automotive industry. Electric vehicles, with their advantages in energy conservation and environmental protection, have become an important part of sustainable development of the automotive industry. For electric vehicles, battery technology is an important factor in connection with their development.

During the use of batteries, it is necessary to collect signals from battery cells (referred to as sampling), and the sampling reliability is crucial for monitoring the usage of the batteries. How the sampling reliability is guaranteed is an urgent technical problem to be solved in battery technology.

### SUMMARY

An objective of this application is to provide a battery, an electric device, and a manufacturing method and manufacturing device of battery. The battery has a good sampling reliability and allows for convenient monitoring of battery cell usage.

This application is implemented using the following technical solutions.

According to a first aspect, this application provides a battery including:
a battery cell, including an electrode terminal;
a sampling terminal, configured to collect a signal from the battery cell; and
a busbar, configured to electrically connect to the battery cell;
where the sampling terminal is disposed between the busbar and the electrode terminal and is welded to the busbar.

In the battery according to embodiments of this application, the sampling terminal is disposed between the busbar and the electrode terminal, and the busbar presses the sampling terminal against the electrode terminal, so that the busbar and the electrode terminal better restrict the position of the sampling terminal. Therefore, when the sampling terminal is being welded to the busbar, the welding gap between the busbar and the sampling terminal is controllable, preventing poor welding between the sampling terminal and the busbar, and ensuring sampling reliability. This facilitates monitoring of the usage of the battery cell and ensures battery safety.

According to some embodiments of this application, the battery further includes a welding portion, and the welding portion is configured to fixedly connect the busbar, the electrode terminal, and the sampling terminal.

In the above solution, the busbar, the electrode terminal, and the sampling terminal are fixedly connected through the welding portion, allowing the busbar, the electrode terminal, and the sampling terminal to be welded simultaneously. This saves one welding step, resulting in reduced costs and increased production efficiency.

According to some embodiments of this application, the busbar is provided with a groove on a side of the busbar facing the electrode terminal, and at least part of the sampling terminal is accommodated in the groove.

In the above solution, the groove of the busbar is provided to accommodate the sampling terminal, limit the sampling terminal, and ensure that the welding gap between the sampling terminal and the busbar is controllable. Furthermore, the distance between the busbar and the electrode terminal is reduced to facilitate the control of the welding gap between the busbar and the electrode terminal, ensuring the welding quality.

According to some embodiments of this application, the groove extends from an edge of the busbar along a first direction, the first direction being orthogonal to the central axis of the electrode terminal.

In the above solution, the groove extends from the edge of the busbar along the first direction, which facilitates the accommodation of the sampling terminal in the groove. This ensures a large contact area between the sampling terminal and the busbar, allowing the sampling terminal to be securely connected to the busbar, thereby ensuring the sampling reliability.

According to some embodiments of this application, a projection of the groove on the electrode terminal does not exceed a central axis of the electrode terminal.

In the above solution, the projection of the groove on the electrode terminal does not exceed the central axis of the electrode terminal, which ensures a good strength of the busbar while ensuring a large overlapping area between the sampling terminal and the welding portion.

According to some embodiments of this application, depth of the groove is H and thickness of the sampling terminal is h1, satisfying h1 - 0.05 mm ≤ H ≤ h1 + 0.05 mm.

In the above solution, a depth direction of the groove is consistent with a thickness direction of the sampling terminal. The relationship between the depth of the groove and the thickness of the sampling terminal reflects an assembling tolerance between the sampling terminal and the groove, ensuring the fitting accuracy between the sampling terminal and the groove and facilitating control of the welding gap. When the depth of the groove is equal to the thickness of the sampling terminal, the busbar is attached to the electrode terminal, facilitating welding of the busbar to the electrode terminal and ensuring the welding quality between the busbar and the electrode terminal.

According to some embodiments of this application, depth of the groove is H and thickness of the busbar is h, satisfying H ≤ h/2.

In the above solution, the depth of the groove is less than or equal to half of the thickness of the busbar, ensuring the strength of the busbar.

According to some embodiments of this application, the welding portion is annular, and an end of the sampling terminal is located within an annular region enclosed by the welding portion.

In the above solution, the welding portion is annular, which ensures a large connection area between the busbar and the electrode terminal, thereby ensuring a reliable between the busbar and the electrode terminal. The end of the sampling terminal is located in the annular region, ensuring a large connection area between the sampling terminal and the busbar. If the sampling terminal is too long, material is wasted and strength of the busbar is affected; if the sampling terminal is too short, the connection area between the sampling terminal and the busbar is small and the sampling reliability is poor.

According to some embodiments of this application, width of the groove is W, width of the sampling terminal is w1, and diameter of the annular region is D, satisfying w1 + 1 mm ≤ W ≤ πD/8.

In the above solution, the relationship between the width of the groove and the diameter of the annular region ensures a large contact area between the busbar and the sampling terminal, and also ensures strength of the busbar. If the width of the groove is too large, strength of the busbar is affected; if the width of the groove is too small, the connection area between the sampling terminal and the busbar is affected, thereby affecting connection strength between the sampling terminal and the busbar and affecting the sampling reliability.

According to some embodiments of this application, the end of the sampling terminal does not exceed the central axis of the electrode terminal, distance between the end of the sampling terminal and the central axis of the electrode terminal is A, and diameter of the annular region is D, satisfying 0 ≤ A ≤ D/2 - 1 mm.

In the above solution, the chosen distance between the end of the sampling terminal and the central axis of the electrode terminal ensures that the sampling terminal and the welding portion have a large contact area, facilitating a reliable connection between the sampling terminal and the busbar. Such distance also ensures that length of the sampling terminal is not excessively long, thus saving materials.

According to some embodiments of this application, the busbar is provided with a through-hole, the electrode terminal is exposed through the through-hole, and the through-hole is staggered with the sampling terminal in the thickness direction of the sampling terminal.

In the above solution, the electrode terminal is exposed through the through-hole for easy checking of welding quality.

According to some embodiments of this application, the busbar, the electrode terminal, and the sampling terminal are made of a same material.

In the above solution, the busbar, electrode terminal, and sampling terminal made of the same material facilitate welding and connection.

According to a second aspect, this application provides an electric device including the battery according to any one of the above solutions, where the battery is configured to supply electric energy.

According to a third aspect, this application provides a manufacturing method of battery, including:
providing a battery cell, the battery cell including an electrode terminal;
providing a sampling terminal, the sampling terminal being configured to collect a signal from the battery cell;
providing a busbar; and
disposing the sampling terminal between the busbar and the electrode terminal, and welding the busbar to the sampling terminal.

According to a fourth aspect, this application provides a manufacturing device of battery, including:
a providing module, configured to provide a battery cell, a sampling terminal, and a busbar, where the battery cell includes an electrode terminal, and the sampling terminal is configured to collect a signal from the battery cell; and
an assembling module, configured to dispose the sampling terminal between the busbar and the electrode terminal, and weld the busbar to the sampling terminal.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

To describe the technical solutions of the embodiments of this application more clearly, the following briefly describes the accompanying drawings required for describing the embodiments of this application. It will be apparent that the accompanying drawings in the following descriptions show merely some embodiments of this application, and persons of ordinary skill in the art may still derive other drawings from the accompanying drawings without creative efforts.
FIG. 1 is a schematic structural diagram of a vehicle according to some embodiments of this application;
FIG. 2 is a schematic structural exploded view of a battery according to some embodiments of this application;
FIG. 3 is a schematic structural diagram of a battery pack according to some embodiments of this application;
FIG. 4 is a schematic structural exploded view of a battery pack according to some embodiments of this application;
FIG. 5 is a top view of a battery pack according to some embodiments of this application;
FIG. 6 is a top view of a battery pack according to some other embodiments of this application;
FIG. 7 is an enlarged view of position B in FIG. 5;
FIG. 8 is a schematic structural diagram of a busbar according to some embodiments of this application;
FIG. 9 is a cross-sectional view of a battery according to some embodiments of this application;
FIG. 10 is an enlarged view of position C in FIG. 9;
FIG. 11 is a cross-sectional view of a busbar according to some embodiments of this application;
FIG. 12 is a schematic flowchart of a manufacturing method of battery according to some embodiments of this application; and
FIG. 13 is a schematic block diagram of a manufacturing device of battery according to some embodiments of this application.

The accompanying drawings are not drawn to scale.

Reference signs: 100. battery; 101. box; 1011. first part; 1012. second part; 10. battery pack; 11. battery cell; 111. electrode terminal; 121. end plate; 122. side plate; 13. busbar; 131. groove; 132. through-hole; 14. connecting portion; 15. sampling terminal; 16. welding portion; 200. controller; 300. motor; and 1000. vehicle.

### DESCRIPTION OF EMBODIMENTS

The following further describes the implementations of this application in detail with reference to the accompanying drawings and embodiments. The following detailed description of embodiments and the accompanying drawings are intended to illustrate the principle of this application rather than to limit the scope of this application, meaning this application is not limited to the embodiments as described.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of A, presence of both A and B, and presence of B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

The battery mentioned in this application is a single physical module that includes a plurality battery cells for providing a higher voltage and capacity. The plurality of battery cells are electrically connected to each other through a busbar.

The battery further includes a sampling terminal, and the sampling terminal is configured to be welded to the busbar for collecting signals from the battery cells.

During the use of the battery, it is necessary to collect signals (for example, voltage signals or temperature signals) from the battery cells. Through the collected signals, the usage status of the battery cells is obtained, the status of the entire battery is determined, and corresponding control adjustments and policies are implemented according to their status to achieve charge and discharge management of each battery cell, ensuring safe and stable operation of the battery.

In the prior art, battery sampling has a low reliability and even prone to failure. The inventors have found that during the battery manufacturing process, the sampling terminal is welded to a side of the busbar facing away from the electrode terminal of the battery cell. Due to dimensional tolerances, positioning tolerances, and other reasons, a gap is present between the sampling terminal and the busbar, which leads to poor welding between the sampling terminal and the busbar, resulting in low sampling reliability (that is, poor sampling). Poor sampling makes it difficult to accurately obtain the usage status of the battery cell, resulting in low battery safety.

In view of this, to resolve the problem of low sampling reliability of battery, the inventor has designed a battery through in-depth research. The battery includes a battery cell, a sampling terminal, and a busbar. The sampling terminal is disposed between the busbar and the electrode terminal and is welded to the busbar.

In such a battery, the sampling terminal is disposed between the busbar and the electrode terminal, and the busbar presses the sampling terminal against the electrode terminal, so that the busbar and the electrode terminal better restrict the position of the sampling terminal. Therefore, when the busbar is being welded to the sampling terminal, the welding gap between the busbar and the sampling terminal is controllable, preventing poor welding between the sampling terminal and the busbar and ensuring sampling reliability. This facilitates monitoring of the usage of the battery cell and ensures battery safety.

In this application, the battery cell may be a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application.

The battery disclosed in the embodiments of this application may be used without limitation in electric devices such as vehicles, ships, or aircrafts. The battery disclosed in this application may be used to constitute a power supply system of that electric device.

An embodiment of this application provides an electric device that uses a battery as a power source. The electric device may be, but is not limited to, a mobile phone, a tablet computer, a laptop computer, an electric toy, an electric tool, an electric bicycle, an electric motorcycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle is used as an example for description of the following embodiments.

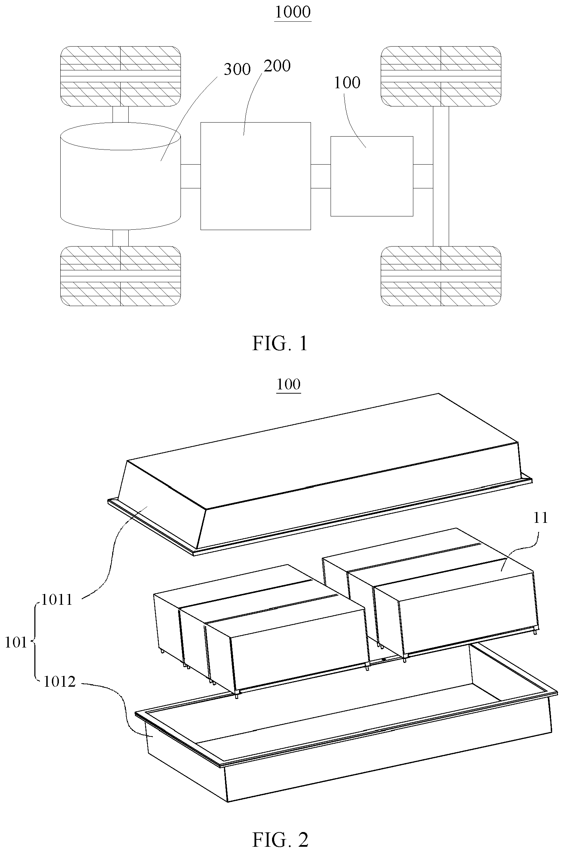

Referring to FIG. 1, FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be disposed at the bottom, front or rear of the vehicle 1000. The battery 100 may be configured to supply power to the vehicle 1000. For example, the battery 100 may be used as an operational power source for the vehicle 1000 for use in a circuit system of the vehicle 1000, for example, to satisfy power needs of start, navigation, and running of the vehicle 1000.

The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

To meet different power usage requirements, the battery 100 may include a plurality of battery cells, where the plurality of battery cells may be connected in series, parallel, or series and parallel, and being connected in series and parallel refers to a combination of series and parallel connections. Optionally, multiple battery cells may be connected in series, parallel, or series-parallel to form a battery pack first, and then multiple battery packs are connected in series, parallel, or series-parallel to form a battery 100. In other words, the plurality of battery cells may be directly combined into a battery 100, or may first combined into battery packs which are then combined into the battery 100.

For example, referring to FIG. 2, FIG. 2 is a schematic structural exploded view of a battery 10 according to some embodiments of this application. As shown in FIG. 2, the battery 100 includes a plurality of battery cells 11. The battery 100 may further include a box 101. The battery cells 11 are accommodated in the box 101. Here, the box 101 is configured to provide an accommodating space for the battery cell 11, and the box 101 may be of various structures. In some embodiments, the box 101 may include a first part 1011 and a second part 1012. The first part 1011 and the second part 1012 fit together so that the first part 1011 and the second part 1012 jointly define the accommodating space for accommodating the battery cell 11. The second part 1012 may be a hollow structure with one end open, and the first part 1011 may be a plate structure, where the first part 1011 covers the open side of the second part 1012 for the first part 1011 and the second part 1012 to jointly define an accommodating space. Alternatively, the first part 1011 and the second part 1012 may both be a hollow structure with one side open, where the open side of the first part 1011 is engaged with the open side of the second part 1012.

The battery 100 may further include a busbar, where the busbar is configured to implement an electrical connection between the plurality of battery cells 11, for example, a parallel connection, a series connection, or a series and parallel connection. Specifically, the busbar may implement the electrical connection between the battery cells 11 by connecting electrode terminals of the battery cells 11. Further, the busbar may be fixed to the electrode terminal of the battery cell 11 by welding. Electrical energy of the plurality of battery cells 11 can be further drawn out of the box through a conductive mechanism. Optionally, the conductive mechanism may also belong to the busbar.

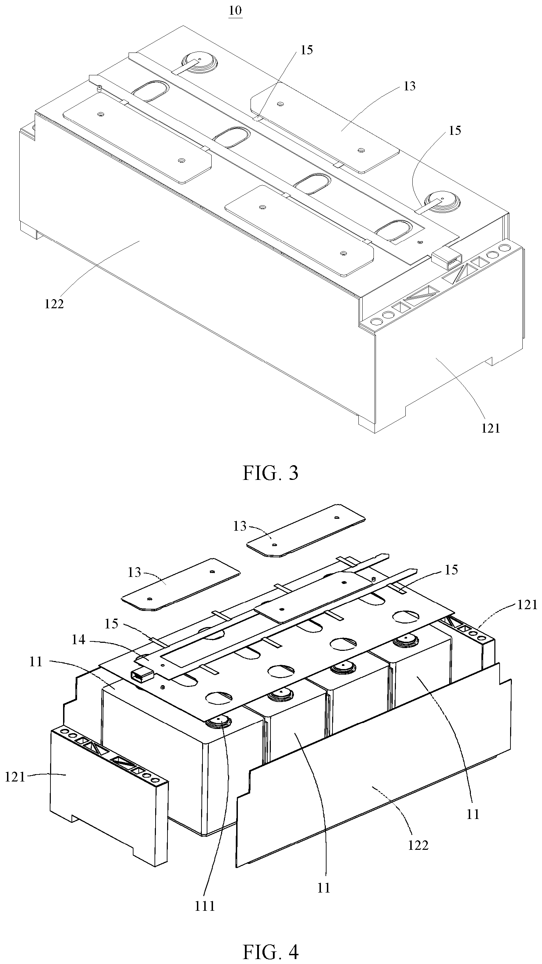

Based on different power demands, battery cells 11 can be configured in any quantity. The plurality of battery cells 11 may be connected in series, in parallel, or in series and parallel to achieve greater capacity or power. Because each battery 100 may include a large number of battery cells 11, for ease of installation, the battery cells 11 may be arranged by group, and each group of battery cells 11 form a battery pack. The quantity of battery cells 11 included in the battery pack is not limited, and may be set according to requirements. For example, FIG. 3 is a schematic structural diagram of a battery pack 10 according to some embodiments of this application. The battery 100 may include a plurality of battery packs 10. These battery packs 10 may be connected in series, parallel, or series-parallel.

Referring to FIG. 4, FIG. 4 is a schematic structural exploded view of a battery pack 10 according to some embodiments of this application. As shown in FIG. 3 and FIG. 4, the battery pack 10 includes a plurality of battery cells 11 and a frame structure for fixing the battery cells 11, where the plurality of battery cells 11 are stacked in a length direction. The frame structure includes end plates 121, and the end plates 121 are located at two ends of the stacked battery cells 11 in the length direction, for limiting movement of the battery cells 11 along the length direction. In some embodiments, the frame structure may further include side plates 122, and the two side plates 122 are located at two sides of the stacked battery cells 11 in a width direction. Furthermore, the side plates 122 are connected to the end plates 121 to form the frame structure.

Each battery cell 11 may be a secondary battery or a primary battery, or may be a lithium-sulfur battery, a sodium-ion battery, or a magnesium-ion battery, without being limited thereto.

Each battery cell 11 includes an electrode terminal 111, and each battery cell 11 includes a positive electrode terminal and a negative electrode terminal. In the battery 100, a plurality of battery cells 11 are electrically connected to each other, specifically in series or parallel or series-parallel, and the electrode terminals 111 of the battery cells 11 are connected to each other through the busbar 13. For example, when the battery cells 11 are connected in series, a positive electrode terminal of one battery cell 11 and a negative electrode terminal of an adjacent battery cell 11 are connected through the busbar 13.

The battery 100 further includes a sampling component. The sampling component is configured to collect a signal such as a temperature or voltage signal during the operation of the battery cell 11, and the collected signal is output through a connecting portion (for example, a circuit board or a cable). The sampling component is electrically connected to the busbar 13, so that signals can be collected from the battery cell 11 through the busbar 13.

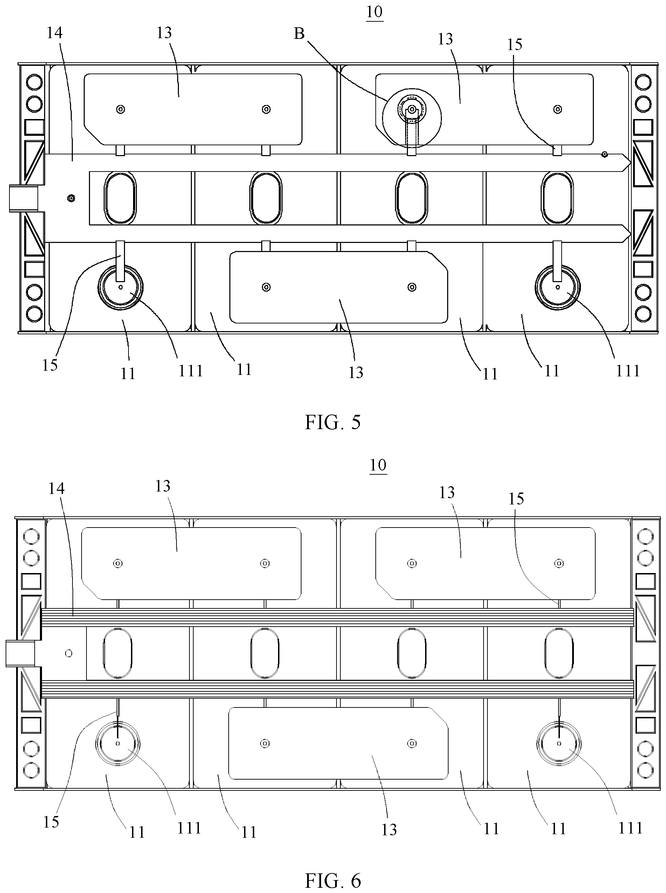

Referring to FIG. 5 and FIG. 6, FIG. 5 is a top view of a battery pack 10 according to some embodiments of this application, and FIG. 6 is a top view of a battery pack 10 according to some other embodiments of this application. As shown in FIG. 5 and FIG. 6, the sampling component includes a connecting portion 14 and a sampling terminal 15. There are a plurality of sampling terminals 15. Each sampling terminal 15 corresponds to one electrode terminal 111. The plurality of sampling terminals 15 are all connected to the connecting portion 14 for output of the collected signals.

The connecting portion 14 is a component that is connected to the sampling terminals 15 and outputs the signals collected by the sampling terminals 15. As shown in FIG. 5, the connecting portion 14 may be an FPC (Flexible Printed Circuit, flexible printed circuit). Alternatively, as shown in FIG. 6, the connecting portion 14 may be an FFC (Flexible Flat Cable, flexible flat cable). The connecting portion 14 may be formed as an elongated structure extending in the length direction of the battery pack 10 (the stacking direction of the battery cell 11) so as to collect signals of each battery cell 11. The sampling terminal 15 may be welded to the connecting portion 14, or the sampling terminal 15 may be bonded to the connecting portion 14 through conductive adhesive, or the sampling terminal 15 may be electrically connected to the connecting portion 14 by insertion.

The sampling terminal 15 is a component for collecting signals from the battery cell 11, and the sampling terminal 15 is electrically connected to the electrode terminal 111 through the busbar 13.

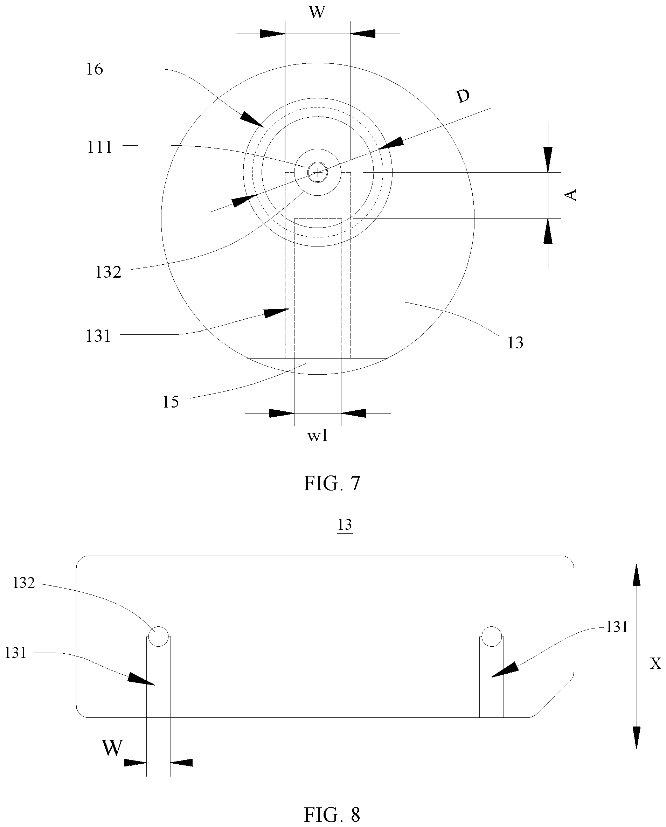

Referring to FIG. 7, FIG. 7 is an enlarged view of position B in FIG. 5. According to some embodiments of this application, as shown in FIG. 2 to FIG. 7, this application provides a battery 100. The battery 100 includes a battery cell 11, a sampling terminal 15, and a busbar 13. The battery cell 11 includes an electrode terminal 111. The sampling terminal 15 is configured to collect a signal from the battery cell 11. The busbar 13 is electrically connected to the battery cell 11. The sampling terminal 15 is disposed between the busbar 13 and the electrode terminal 111 and is welded to the busbar 13.

The electrode terminal 111 is an electrical energy conducting component of the battery cell 11, and configured to output electrical energy of the battery cell 11 or input electrical energy to the battery cell 11.

That the busbar 13 is electrically connected to the battery cell 11 means that the busbar 13 is electrically connected to the electrode terminal 111. To ensure the stability of the electrical connection between the busbar 13 and the electrode terminal 111, the positions of the busbar 13 and the electrode terminal 111 are relatively fixed. Typically, the busbar 13 is welded to the electrode terminal 111.

The sampling terminal 15 is welded to the busbar 13 to realize the electrical connection between the sampling terminal 15 and the electrode terminal 111. The sampling terminal 15 is electrically connected to the electrode terminal 111 of the battery cell 11 through the busbar 13 to collect the signals of the battery cell 11.

The sampling terminal 15 is disposed between the busbar 13 and the electrode terminal 111, and spatially, the sampling terminal 15 is confined between the busbar 13 and the electrode terminal 111. Since the busbar 13 is welded to the electrode terminal 111, the sampling terminal 15 is welded to the busbar 13 so that the sampling terminal 15 is indirectly fixed to the electrode terminal 111.

The signals of the battery cell 11 include temperature and voltage signals. The battery 100 further includes a connecting portion 14. The connecting portion 14 is electrically connected to the sampling terminal 15, and the signals collected by the sampling terminal 15 from the battery cell 11 are output via the connecting portion 14.

It should be noted that since a plurality of battery cells 11 are provided, each battery cell 11 has a positive electrode terminal and a negative electrode terminal, and the battery pack 10 has two electrode terminals 111 for outputting or inputting electrical energy, each of the two electrode terminals 111 is connected (for example, in series, parallel, or series-parallel) to another battery cell 11 via the busbar 13 to form a power supply system for an electric device.

In the battery 100 according to the embodiments of this application, the sampling terminal 15 is disposed between the busbar 13 and the electrode terminal 111, and the busbar 13 presses the sampling terminal 15 against the electrode terminal 111, so that the busbar 13 and the electrode terminal 111 better restrict the position of the sampling terminal 15. Therefore, when the sampling terminal 15 is being welded to the busbar 13, the welding gap between the busbar 13 and the sampling terminal 15 is controllable, preventing poor welding between the sampling terminal 15 and the busbar 13 and ensuring sampling reliability. This facilitates monitoring of the usage of the battery cell 11 and ensures safety of the battery 100.

According to some embodiments of this application, optionally, as shown in FIG. 7, the battery 100 further includes a welding portion 16. The welding portion 16 is configured to fixedly connect the busbar 13, the electrode terminal 111, and the sampling terminal 15.

The welding portion 16 is a welding region. Welding marks are formed after the components are welded to the welding portion 16. That the welding portion 16 is configured to fixedly connect the busbar 13, the electrode terminal 111, and the sampling terminal 15 means that the busbar 13, the electrode terminal 111, and the sampling terminal 15 are fixedly connected through the welding portion 16. In other words, since the sampling terminal 15 is disposed between the busbar 13 and the electrode terminal 111, when the busbar 13 is welded to the electrode terminal 111, the sampling terminal 15 is fixed to both the busbar 13 and the electrode terminal 111 by welding.

In the prior art, the busbar 13 is welded to the electrode terminal 111, and the sampling terminal 15 is welded to a side of the busbar 13 facing away from the electrode terminal 111, which involves two welding operations. In this application, the busbar 13, the electrode terminal 111, and the sampling terminal 15 are fixedly connected through the welding portion 16, so the busbar 13, the electrode terminal 111, and the sampling terminal 15 are welded simultaneously, saving the separate welding process of welding the busbar 13 to the electrode terminal 111. This can reduce costs and improve production efficiency.

According to some embodiments of this application, optionally, the busbar 13 is provided with a groove 131 on a side of the busbar 13 facing the electrode terminal 111, and at least part of the sampling terminal 15 is accommodated in the groove 131.

The groove 131 is an accommodating space provided on the side of the busbar 13 facing the electrode terminal 111. In other words, the groove 131 is formed by a surface of the busbar 13 facing the electrode terminal 111 being recessed towards a surface facing away from the electrode terminal 111. The groove 131 is configured to accommodate the sampling terminal 15, so as to reduce the distance between the busbar 13 and the electrode terminal 111 and ensure the welding quality between the busbar 13 and the electrode terminal 111.

That at least part of the sampling terminal 15 is accommodated in the groove 131 means that in the stacking direction of the busbar 13, the sampling terminal 15, and the electrode terminal 111, that is, in the thickness direction of the busbar 13, part of the sampling terminal 15 is accommodated in the groove 131 and the other part of the sampling terminal 15 is located outside the groove 131; or the entire sampling terminal 15 is accommodated in the groove 131.

In the embodiment where part of the sampling terminal 15 is accommodated in the groove 131, there is a gap between the busbar 13 and the electrode terminal 111 in the vicinity where the busbar 13 is connected to the sampling terminal 15. The gap matches a part of the sampling terminal 15 protruding out of the groove 131 in size. In this case, the sampling terminal 15 is pressed against the electrode terminal 111 by the busbar 13.

In the embodiment where the entire sampling terminal 15 is accommodated in the groove 131, the busbar 13 is attached to the electrode terminal 111, and the sampling terminal 15 does not affect the contact between the busbar 13 and the electrode terminal 111. In this case, the busbar 13 restricts the movement of the sampling terminal 15 to facilitate welding of the busbar 13 to the sampling terminal 15 and control of the welding gap between the busbar 13 and the sampling terminal 15.

It should be noted that the entire sampling terminal 15 being accommodated in the groove 131 means the entire sampling terminal 15 being located in the groove 131 in the stacking direction of the busbar 13, the sampling terminal 15, and the electrode terminal 111.

The groove 131 of the busbar 13 is provided to accommodate the sampling terminal 15, limit the sampling terminal 15, and ensure that the welding gap between the sampling terminal 15 and the busbar 13 is controllable. Provision of the groove 131 also reduces the distance between the busbar 13 and the electrode terminal 111, facilitating control of the welding gap between the busbar 13 and the electrode terminal 111 to ensure the welding quality.

Referring to FIG. 8, FIG. 8 is a schematic structural diagram of a busbar 13 according to some embodiments of this application. According to some embodiments of this application, optionally, as shown in FIG. 7 and FIG. 8, the groove 131 extends from an edge of the busbar 13 along a first direction X, the first direction X being orthogonal to a central axis of the electrode terminal 111.

The electrode terminal 111 has an end surface facing the busbar 13, and the central axis of the electrode terminal 111 is perpendicular to the end surface and runs through the center of the end surface. Typically, the end surface is a regularly-shaped flat plane, for example, a round or rectangular surface.

The first direction X is orthogonal to the central axis of the electrode terminal 111. In other words, the first direction X is perpendicular to an extension direction of the central axis of the electrode terminal 111.

That the groove 131 extends from an edge of the busbar 13 along a first direction X means that one end of the groove 131 is located at the edge of the busbar 13 and the other end thereof extends towards the central axis of the electrode terminal 111.

The groove 131 extends from the edge of the busbar 13 along the first direction X, which facilitates the accommodation of the sampling terminal 15 in the groove 131. This ensures a large contact area between the sampling terminal 15 and the busbar 13, allowing for a reliable connection between the sampling terminal 15 and the busbar 13 to ensure the sampling reliability.

According to some embodiments of this application, optionally, a projection of the groove 131 on the electrode terminal 111 does not exceed the central axis of the electrode terminal 111.

The projection of the groove 131 on the electrode terminal 111 refers to the projection of the groove 131 on the electrode terminal 111 in the direction of the central axis of the electrode terminal 111, that is, the projection of the groove 131 on an end surface of the electrode terminal 111 facing the busbar 13.

That the projection of the groove 131 on the electrode terminal 111 does not exceed the central axis of the electrode terminal 111 means that the projection of the groove 131 on the electrode terminal 111 does not extend to the central axis of the electrode terminal 111 in the first direction X. In other words, the end of the groove 131 does not exceed the central axis of the electrode terminal 111 in the first direction X.

The projection of the groove 131 on the electrode terminal 111 does not exceed the central axis of the electrode terminal 111, which ensures a relatively large overlapping area between the sampling terminal 15 and the welding portion 16, and also ensures a good strength of the busbar 13. If the extension length of the groove 131 is too long and exceeds the central axis of the electrode terminal 111, strength of the busbar 13 is weakened; if the extension length of the groove 131 is too short, the overlapping area between the sampling terminal 15 and the welding portion 16 is affected, thereby affecting the connection stability between the sampling terminal 15 and the busbar 13.

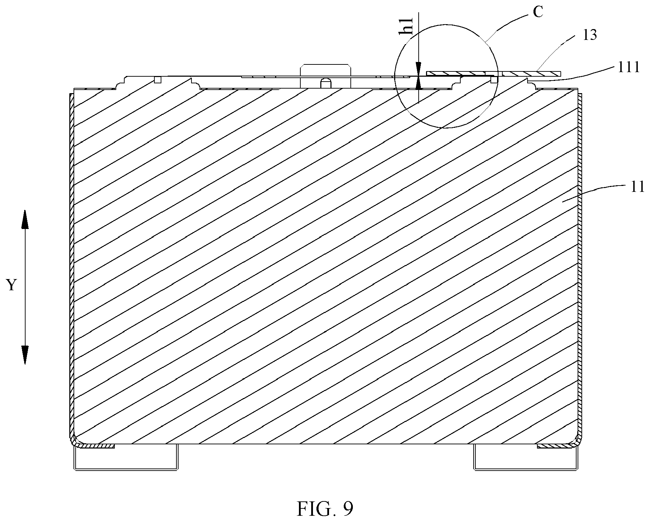

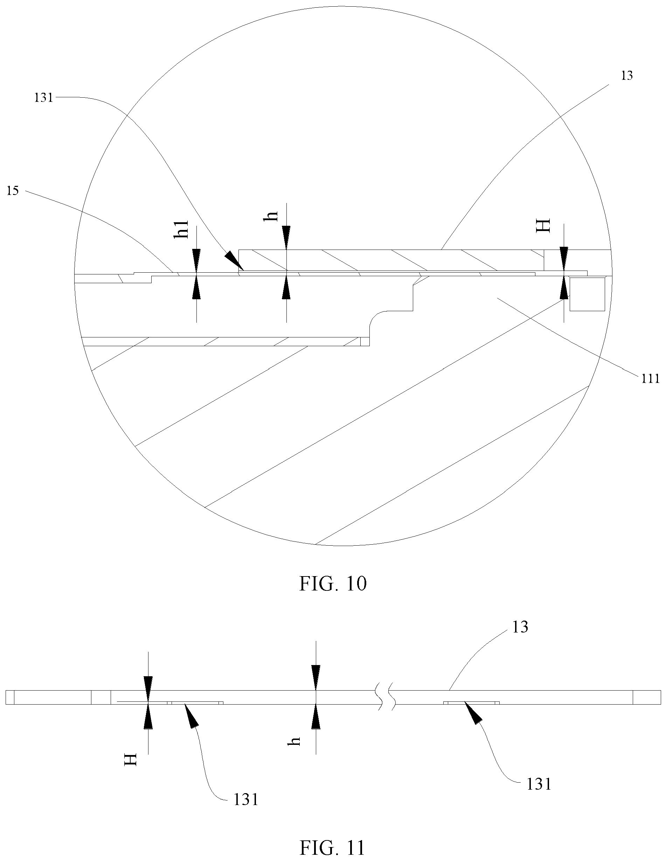

Referring to FIG. 9 and FIG. 10, FIG. 9 is a cross-sectional view of a battery 100 according to some embodiments of this application, and FIG. 10 is an enlarged view of position C in FIG. 9. FIG. 11 is a cross-sectional view of a busbar 13 according to some embodiments of this application. According to some embodiments of this application, optionally, as shown in FIG. 9 to FIG. 11, depth of the groove 131 is H and thickness of the sampling terminal 15 is h1, satisfying h1 - 0.05 mm ≤ H ≤ h1 + 0.05 mm.

The depth H of the groove 131 refers to dimension of the groove 131 in the stacking direction of the busbar 13, the sampling terminal 15, and the electrode terminal 111, that is, dimension of the groove 131 in the thickness direction of the busbar 13.

The thickness direction of the sampling terminal 15 is consistent with the thickness direction of the busbar 13. The thickness direction of the sampling terminal 15 is also the stacking direction of the busbar 13, the sampling terminal 15, and the electrode terminal 111.

It should be noted that for ease of description, in figures of this application, the direction marked as Y is a second direction, and the second direction Y is parallel to the depth direction of the groove 131, the thickness direction of the busbar 13, and the thickness direction of the sampling terminal 15.

The relationship between the depth H of the groove 131 and the thickness h1 of the sampling terminal 15 may alternatively be -0.05 mm ≤ H - h1 ≤ +0.05 mm. When H - h1 < 0, in the thickness direction of the busbar 13, part of the sampling terminal 15 protrudes out of the groove 131, and there is a gap between the surface of the busbar 13 facing the electrode terminal 111 and the electrode terminal 111. When H - h1 ≥ 0, in the thickness direction of the busbar 13, the entire sampling terminal 15 is accommodated in the groove 131, and the surface of the busbar 13 facing the electrode terminal 111 is attached to the electrode terminal 111.

The relationship between the depth of the groove 131 and the thickness of the sampling terminal 15 satisfies h1 - 0.05 mm ≤ H ≤ h1 + 0.05 mm. There is an assembling tolerance between the sampling terminal 15 and the groove 131, which ensures the fitting accuracy between the sampling terminal 15 and the groove 131, facilitating control of the welding gap between the sampling terminal 15 and the busbar 13. When the depth of the groove 131 is equal to the thickness of the sampling terminal 15, the busbar 13 can be attached to the electrode terminal 111, facilitating welding of the busbar 13 to the electrode terminal 111 and ensuring the welding quality between the busbar 13 and the electrode terminal 111. In addition, the movement of the sampling terminal 15 in the groove 131 can be limited, ensuring the welding quality between the sampling terminal 15 and the busbar 13.

According to some embodiments of this application, optionally, depth of the groove 131 is H and thickness of the busbar 13 is h, satisfying H ≤ h/2.

The depth H of the groove 131 refers to dimension of the groove 131 in the thickness direction of the busbar 13. In other words, the groove 131 is a region hollowed out in the busbar 13 in the thickness direction of the busbar 13.

The depth H of the groove 131 and the thickness h of the busbar 13 satisfy H ≤ h/2, meaning that the depth H of the groove 131 is less than or equal to half of the thickness h of the busbar 13, ensuring the strength of the busbar 13. If the depth H of the groove 131 is too large, the strength of the busbar 13 is affected.

According to some embodiments of this application, optionally, as shown in FIG. 7, the welding portion 16 is annular, and an end of the sampling terminal 15 is located within an annular region enclosed by the welding portion 16.

The welding portion 16 is annular, that is, the track of welding between the busbar 13 and the electrode terminal 111 is annular, and the annulus may be disposed around the central axis of the electrode terminal 111. In other words, the direction of the welding between the busbar 13 and the electrode terminal 111 is parallel to the extension direction of the central axis of the electrode terminal 111.

That an end of the sampling terminal 15 is located within an annular region enclosed by the welding portion 16 means that in the extension direction of the sampling terminal 15, the sampling terminal 15 extends into the annular region enclosed by the welding portion 16 so that the track of the welding between the busbar 13 and the electrode terminal 111 covers the sampling terminal 15. At the overlap position between the sampling terminal 15 and the electrode terminal 111, the welding portion 16 at the overlap position is used to weld fix the stacked busbar 13, sampling terminal 15, and electrode terminal 111 by welding.

The welding portion 16 is annular, which ensures a large connection area between the busbar 13 and the electrode terminal 111, thereby ensuring a reliable connection between the busbar 13 and the electrode terminal 111. The end of the sampling terminal 15 is located in the annular region, ensuring a large connection area between the sampling terminal 15 and the busbar 13. If the sampling terminal 15 is too long, for example, the end of the sampling terminal 15 extends out of the annular region, material is wasted and strength of the busbar 13 is affected. If the sampling terminal 15 is too short, for example, the end of the sampling terminal 15 does not extend into the annular region, the sampling terminal 15 and the busbar 13 have a small connection area, leading to poor sampling reliability.

According to some embodiments of this application, optionally, as shown in FIG. 7 and FIG. 8, width of the groove 131 is W, width of the sampling terminal 15 is w1, and diameter of the annular region is D, satisfying w1 + 1 mm ≤ W ≤ πD/8.

The width W of the groove 131 refers to the dimension of the groove 131 in a direction perpendicular to the first direction X inside the surface of the busbar 13 facing the electrode terminal 111.

For ease of understanding, the diameter D of the annular region refers to diameter of a circle in which the welding track of the welding portion 16 is located.

When the sampling terminal 15 is accommodated in the groove 131, the width direction of the groove 131 is consistent with the width direction of the sampling terminal 15.

The relationship between the width w1 of the sampling terminal 15 and the width W of the groove 131 satisfies w1 + 1 mm ≤ W, that is, the value obtained by subtracting the width w1 of the sampling terminal 15 from the width W of the groove 131 is greater than or equal to 1 mm. This ensures that the sampling terminal 15 can be accommodated in the groove 131 in the width direction, avoiding interference between the sampling terminal 15 and the busbar 13.

The relationship between the width W of the groove 131 and the diameter D of the annular region satisfies W ≤ πD/8, ensuring a large contact area between the busbar 13 and the sampling terminal 15 and ensuring strength of the busbar 13. If the width D of the groove 131 is too large, strength of the busbar 13 is affected; if the width D of the groove 131 is too small, the connection area between the sampling terminal 15 and the busbar 13 is affected, thereby affecting connection strength between the sampling terminal 15 and the busbar 13 and affecting the sampling reliability.

According to some embodiments of this application, optionally, as shown in FIG. 7, the end of the sampling terminal 15 does not exceed the central axis of the electrode terminal 111, distance between the end of the sampling terminal 15 and the central axis of the electrode terminal 111 is A, and diameter of the annular region is D, satisfying 0 ≤ A ≤ D/2 - 1 mm.

That the end of the sampling terminal 15 does not exceed the central axis of the electrode terminal 111 means that when the sampling terminal 15 extends from an edge of the busbar 13 along the first direction X, the end of the sampling terminal 15 does not extend to the central axis of the electrode terminal 111 so that there is a distance between the end of the sampling terminal 15 and the central axis of the electrode terminal 111; or the end of the sampling terminal 15 extends to the central axis of the electrode terminal 111 and the central axis of the electrode terminal 111 lies at the end of the sampling terminal 15.

The distance A between the end of the sampling terminal 15 and the central axis of the electrode terminal 111 satisfies 0 ≤ A ≤ D/2 - 1 mm, which ensures a large contact area between the sampling terminal 15 and the welding portion 16, making it easier for the sampling terminal 15 to connect stably to the busbar. Such distance also ensures that length of the sampling terminal 15 is not too long, saving materials.

According to some embodiments of this application, optionally, as shown in FIG. 7 and FIG. 8, the busbar 13 is provided with a through-hole 132, the electrode terminal 111 is exposed through the through-hole 132, and the through-hole 132 is staggered with the sampling terminal 15 along the thickness direction of the sampling terminal 15.

The busbar 13 is provided with a through-hole 132, and the through-hole 132 runs through the busbar 13 in the thickness direction of the busbar 13 to allow the electrode terminal 111 to expose.

In the thickness direction of the sampling terminal 15, the through-hole 132 is staggered with the sampling terminal 15, that is, a projection of the through-hole 132 on the electrode terminal 111 does not overlap with the projection of the sampling terminal 15 on the electrode terminal 111.

The electrode terminal 111 is exposed through the through-hole 132, which facilitates the checking of a distance between the surface of the busbar 13 facing the electrode terminal 111 and the electrode terminal 111, and thus facilitates the checking of the quality of welding between the busbar 13 and the electrode terminal 111.

According to some embodiments of this application, optionally, the busbar 13, the electrode terminal 111, and the sampling terminal 15 are made of a same material.

The busbar 13, the electrode terminal 111, and the sampling terminal 15 are made of a same material, for example, the busbar 13, the electrode terminal 111, and the sampling terminal 15 are all made of aluminum, delivering a good electrical conductivity.

When the busbar 13, the electrode terminal 111, and the sampling terminal 15 are made of a same material, it facilitates welding connection.

According to some embodiments of this application, this application further provides an electric device including the battery 100 described in any one of the above solutions, where the battery 100 is configured to supply electric energy to the electric device.

The electric device may be any one of the foregoing devices or systems using the battery 100.

According to some embodiments of this application, as shown in FIG. 2 to FIG. 11, this application provides a battery 100, where the battery 100 includes a battery cell 11, a sampling terminal 15, and a busbar 13. The battery cell 11 includes an electrode terminal 111. The sampling terminal 15 is configured to collect a signal from the battery cell 11. The busbar 13 is configured to electrically connect to the electrode terminal 111 of the battery cell 11. The sampling terminal 15 is disposed between the busbar 13 and the electrode terminal 111. The busbar 13 is provided with a groove 131 on a side of the busbar 13 facing the electrode terminal 111, and the sampling terminal 15 is accommodated in the groove 131. The battery 100 further includes a welding portion 16, and the welding portion 16 fixedly connects the busbar 13, the electrode terminal 111, and the sampling terminal 15. In this way, fixed connection of the busbar 13, the electrode terminal 111, and the sampling terminal 15 is realized through one welding.

The sampling terminal 15 is pressed against the electrode terminal 111 through the busbar 13, so that the sampling terminal 15 is confined between the busbar 13 and the electrode terminal 111. This ensures that the welding gap between the busbar 13 and the sampling terminal 15 is controllable, preventing poor welding between the sampling terminal 15 and the busbar 13 and ensuring sampling reliability. This facilitates monitoring of the usage of the battery cell 11 and ensures safety of the battery 100.

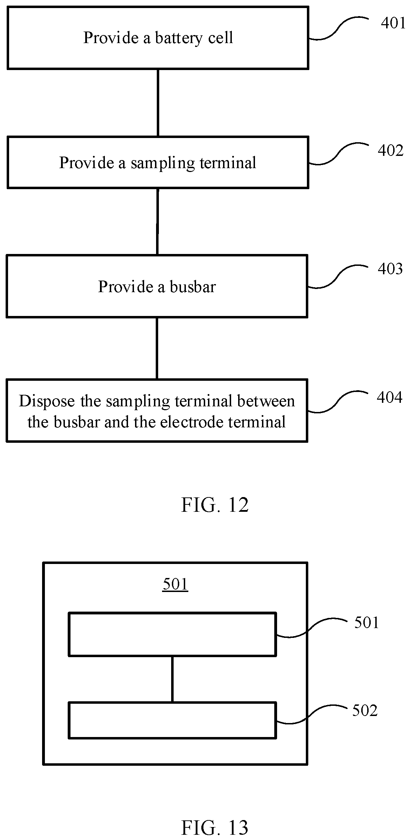

FIG. 12 illustrates a schematic flowchart of a manufacturing method of battery according to some embodiments of this application. As shown in FIG. 12, the manufacturing method of battery may include:
401. Provide a battery cell 11, the battery cell 11 including an electrode terminal 111;
402. Provide a sampling terminal 15, the sampling terminal 15 being configured to collect a signal from the battery cell 11;
403. Provide a busbar 13; and
404. Dispose the sampling terminal 15 between the busbar 13 and the electrode terminal 111, and welding the busbar 13 to the sampling terminal 15.

It should be noted that the sequence of steps "401. Provide a battery cell 11", "402. Provide a sampling terminal 15", and "403. Provide a busbar 13" in this application is not limited. In addition to the above sequence, the sequence may alternatively be "402. Provide a sampling terminal 15", "401. Provide a battery cell 11", and "403. Provide a busbar 13"; or the sequence may be "403. Provide a busbar 13", "401. Provide a battery cell 11", and "402. Provide a sampling terminal 15 ", and the like.

FIG. 13 is a schematic block diagram of a battery manufacturing device 500 according to some embodiments of this application. As shown in FIG. 13, the battery manufacturing device 500 may include: a providing module 501 and an assembling module 502.

The providing module 501 is configured to provide a battery cell 11, a sampling terminal 15, and a busbar 13, where the battery cell 11 includes an electrode terminal 111, and the sampling terminal 15 is configured to collect a signal from the battery cell 11.

The assembling module 502 is configured to dispose the sampling terminal 15 between the busbar 13 and the electrode terminal 111, and weld the busbar 13 to the sampling terminal 15.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery, comprising:
a battery cell, comprising an electrode terminal;
a sampling terminal, configured to collect a signal from the battery cell; and
a busbar, configured to electrically connect to the battery cell;
wherein the sampling terminal is disposed between the busbar and the electrode terminal and is welded to the busbar.

2. The battery according to claim 1, wherein the battery further comprises a welding portion, and the welding portion is configured to fixedly connect the busbar, the electrode terminal, and the sampling terminal.

3. The battery according to claim 2, wherein the busbar is provided with a groove on a side of the busbar facing the electrode terminal, and at least part of the sampling terminal is accommodated in the groove.

4. The battery according to claim 3, wherein the groove extends from an edge of the busbar in a first direction, the first direction being orthogonal to a central axis of the electrode terminal.

5. The battery according to claim 4, wherein a projection of the groove on the electrode terminal does not exceed the central axis of the electrode terminal.

6. The battery according to any one of claims 3 to 5, wherein depth of the groove is H and thickness of the sampling terminal is h1, satisfying h1 - 0.05 mm ≤ H ≤ h1 + 0.05 mm.

7. The battery according to any one of claims 3 to 5, wherein depth of the groove is H and thickness of the busbar is h, satisfying H ≤ h/2.

8. The battery according to any one of claims 3 to 7, wherein the welding portion is annular and an end of the sampling terminal is located within an annular region enclosed by the welding portion.

9. The battery according to claim 8, wherein width of the groove is W, width of the sampling terminal is w1, and diameter of the annular region is D, satisfying w1 + 1 mm ≤ W ≤ πD/8.

10. The battery according to claim 8, wherein the end of the sampling terminal does not exceed the central axis of the electrode terminal, distance between the end of the sampling terminal and the central axis of the electrode terminal is A, and diameter of the annular region is D, satisfying 0 ≤ A ≤ D/2 - 1 mm.

11. The battery according to any one of claims 1 to 10, wherein the busbar is provided with a through-hole, the electrode terminal is exposed through the through-hole, and the through-hole is staggered with the sampling terminal in a thickness direction of the sampling terminal.

12. The battery according to any one of claims 1 to 11, wherein the busbar, the electrode terminal, and the sampling terminal are made of a same material.

13. An electric device comprising the battery according to any one of claims 1 to 12, wherein the battery is configured to supply electric energy.

14. A manufacturing method of battery, comprising:
providing a battery cell, the battery cell comprising an electrode terminal;
providing a sampling terminal, the sampling terminal being configured to collect a signal from the battery cell;
providing a busbar; and
disposing the sampling terminal between the busbar and the electrode terminal, and welding the busbar to the sampling terminal.

15. A manufacturing device of battery, comprising:
a providing module, configured to provide a battery cell, a sampling terminal, and a busbar, wherein the battery cell comprises an electrode terminal, and the sampling terminal is configured to collect a signal from the battery cell; and
an assembling module, configured to dispose the sampling terminal between the busbar and the electrode terminal, and weld the busbar to the sampling terminal.
